**Europäisches Patentamt**

**European Patent Office**

**Office européen des brevets**

(11) Veröffentlichungsnummer: **0 243 745**
**A1**

(12) **EUROPÄISCHE PATENTANMELDUNG**

(21) Anmeldenummer: **87105171.0**

(22) Anmeldetag: **08.04.87**

(51) Int. Cl.³: **F 16 B 13/00**

(30) Priorität: **23.04.86 DE 3613624**

(43) Veröffentlichungstag der Anmeldung:
**04.11.87 Patentblatt 87/45**

(84) Benannte Vertragsstaaten:
**AT BE CH DE ES FR GB GR IT LI NL SE**

(71) Anmelder: **DYNAMIT NOBEL AKTIENGESELLSCHAFT**
**Postfach 1261**
**D-5210 Troisdorf, Bez. Köln(DE)**

(72) Erfinder: **Bender, Richard, Dr.**
**Hohe Marter 28**
**D-8560 Lauf(DE)**

(72) Erfinder: **Bretfeld, Anton**
**Kreuzsteinweg 28**
**D-8510 Fürth(DE)**

(72) Erfinder: **Homburg, Axel, Dr.**
**Lortzingstrasse 21**
**D-6204 Taunusstein(DE)**

(54) **Pyrotechnischer Dübel.**

(57) Der Dübel weist einen Schaft (10) auf, an dessem vorderen Ende ein Verformungsraum (11) angeordnet ist, der eine Sprengkapsel (12) enthält. Das Auslösen der Sprengkapsel (12) erfolgt vom rückwärtigen Ende des Schafts aus mit einem Auslösewerkzeug, das in den Längskanal (19) des Schafts (10) eingeführt wird und in direkte Berührung mit dem Boden (15) der Sprengkapsel (12) kommt.

FIG.1

EP 0 243 745 A1

## Pyrotechnischer Dübel

Die Erfindung betrifft einen pyrotechnischen Dübel nach
dem Oberbegriff des Patentanspruchs 1.

Es ist bekannt, Niete oder Dübel als Sprengniete bzw.
Sprengdübel auszubilden (DE-OS 26 41 588). Hierbei befindet sich am vorderen Ende eines Schaftes ein Verformungsraum, der eine Sprengkapsel enthält. Bei
Sprengnieten, bei denen das vordere Ende hinter den
beiden zu verbindenden Teilen freiliegt, bereitet das
Auslösen der Sprengkapsel keine Probleme, da das
vordere Ende des Sprengniets zugänglich ist. Ein
Sprengdübel, der in ein Sackloch eingesetzt ist und bei
dem das vordere Ende nicht zugänglich ist, erfordert
zum Auslösen der Sprengkapsel Induktionswärme. Um die
Sprengkapsel durch Induktion auslösen zu können, darf
der Abstand zwischen dem induzierenden Elektromagneten
und der Sprengkapsel nicht zu groß sein, so daß die
Anwendung solcher Sprengdübel auf solche zu verbindenden Elemente beschränkt ist, die dünne Wandteile haben. Die bekannten pyrotechnischen Dübel eignen sich nicht zur Verankerung in Massivsteinen und Beton.

Der Erfindung liegt die Aufgabe zugrunde, einen pyrotechnischen Dübel nach dem Oberbegriff des Patentanspruchs 1 zu schaffen, der in dicken Wänden verankert werden kann.

Die Lösung dieser Aufgabe erfolgt erfindungsgemäß mit den Merkmalen des kennzeichnenden Teils des Patentanspruchs 1.

Der erfindungsgemäße pyrotechnische Dübel hat einen Längskanal, durch den hindurch die Sprengkapsel zugänglich ist, um Wärme durch Wärmeleitung oder Schläge bzw. Vibrationen auf die Sprengkapsel übertragen zu können, um diese auszulösen. Durch den Längskanal ist die Sprengkapsel nach dem Einsetzen des Dübels in ein Sackloch von außen her noch zugänglich, so daß die Sprengladung auf einfache Weise zur Detonation gebracht werden kann.

Der erfindungsgemäße Dübel eignet sich insbesondere zur Verankerung in Massivsteinen, Hohlmauerwerk oder Beton; er besteht vorzugsweise aus Metall. Seine Auslösung kann thermisch, durch Einzelschläge oder durch Ultraschall erfolgen. Durch den Längskanal hindurch kann ein entsprechendes Auslösewerkzeug in Berührungskontakt mit der rückwärtigen Stirnwand der Sprengkapsel gebracht werden, um die Sprengkapsel auszulösen.

Der Längskanal ist vorzugsweise mit einem Innengewinde versehen. Dies ermöglicht es, Schrauben in den Längskanal einzusetzen. Wenn der Schaft im Bereich des Längskanals in Längsrichtung geschlitzt ist, kann durch das Eindrehen der Schraube eine zusätzliche Spreizwirkung hervorgerufen werden, so daß die Haltekraft des
Dübels noch erhöht wird.

Gemäß einer bevorzugten Weiterbildung der Erfindung ist
zwischen dem Verformungsraum und dem Längskanal eine
dem Schaft einstückig angeformte ringförmige Stützwand
angeordnet. Diese Stützwand hat ein Loch, durch das daß
Auslösewerkzeug hindurchgesteckt werden kann. Andererseits bewirkt die Stützwand eine Verdämmung des Verformungsraum, so daß sichergestellt ist, daß die pyrotechnische Ladung den Verformungsbereich aufweitet,
während der dahinterliegende Schaftbereich unverformt
bleibt.

Als Auslösewerkzeug kann eine langgestreckte Vorrichtung vorgesehen sein, die am vorderen Ende eine Heizvorrichtung trägt und nach Art einer Lötpistole ausgebildet ist. Alternativ kann auch ein langgestreckter
Dorn verwendet werden, der gegen die Sprengkapsel geschlagen wird. In jedem Fall muß das Auslösewerkzeug so
lang sein, daß an seinem rückwärtigen Ende ein Griffteil noch über das rückwärtige Ende des Dübelschafts
hinausragt, wenn das vordere Ende des Auslösewerkzeugs
gegen die Sprengkapsel stößt.

Im folgenden werden unter Bezugnahme auf die Zeichnungen
Ausführungsbeispiele der Erfindung näher erläutert.

Es zeigen:

Fig. 1 einen Längsschnitt durch eine erste Ausführungsform des pyrotechnischen Dübels, und

Fig. 2 einen Längsschnitt durch eine zweite Ausführungsform mit Zündhütchen.

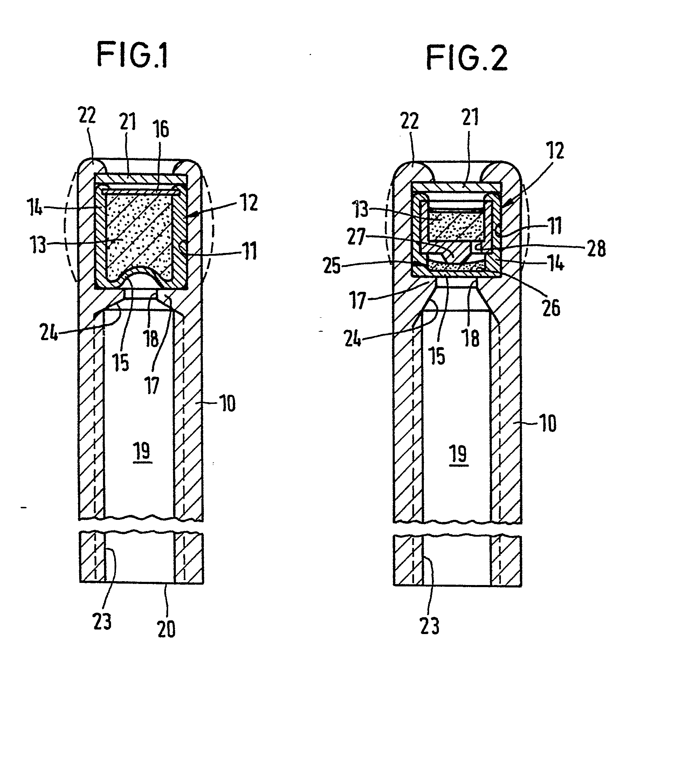

Der in Fig. 1 dargestellte Dübel weist einen zylindrischen Schaft 10 auf, an dessen vorderen Ende der Verformungsraum 11 gebildet ist. Im Verformungsraum 11 befindet sich die Sprengkapsel 12, die aus einer mit einer pyrotechnischen Ladung 13 gefüllten zylindrischen Hülse 14 besteht. Der Hülsenboden 15 ist dünnwandiger ausgebildet als die Umfangswand der Hülse 14 und er bildet eine Eindrückung, d.h. er ist in Richtung auf das Hülseninnere gewölbt. Das dem Hülsenboden 15 abgewandte offene Hülsenende ist mit einer Dämmplatte 16 verschlossen.

Die Sprengkapsel 12 stützt sich mit ihrem rückwärtigen Ende (mit der Bodenwand 15) an der ringförmigen Stützwand 17 ab, die dem Schaft 10 einstückig angeformt ist und die den Verformungsraum 11 nach hinten begrenzt. Durch eine axiale Öffnung 18 in der Stützwand 17 steht der Verformungsraum 11 mit dem Längskanal 19 in Verbindung, der sich bis zum rückwärtigen Ende 20 des Schafts 10 erstreckt und dort frei ausläuft.

Nach vorne wird der Verformungsraum 11 von einer scheibenförmigen Deckplatte 21 begrenzt, die von der Schaftwand durch Bördelung 22 umgriffen wird.

Der Längskanal 19 weist ein Innengewinde 23 auf.

Beim Einsatz des pyrotechnischen Dübels wird in die Wand, in der der Dübel befestigt werden soll, ein Loch gebohrt, das dem Außendurchmesser des Schafts 10 entspricht. Der Dübel wird in dieses Loch eingeschoben. Anschließend wird eine stabförmige Auslösevorrichtung, die am vorderen Ende eine Heizvorrichtung trägt, in den Längskanal 19 eingeführt. Die Heizvorrichtung dringt durch die Öffnung 18 bis zum Hülsenboden 15 vor, wobei sie durch die schräge Ringfläche 24 der Stützwand in das Loch 18 geführt wird. Die heiße Spitze der (nicht dargestellten) Auslösevorrichtung bringt durch direkten Kontakt mit dem Hülsenboden 15 die pyrotechnische Ladung 13 zur Auslösung, wobei sich die Wand des Verformungsraums 11 aufweitet, sowie dies in Fig. 1 gestrichelt dargestellt ist. Hierbei erfolgt eine nahezu plastische Anpassung des Metalls des Verformungsraums an das umgebende Material. Durch das pyrotechnische Spreizen des Verformungsraums wird ein guter Halt des Dübels in der Wand erreicht. Dieser Halt kann noch dadurch unterstützt werden, daß der Dübel im Bereich des Innengewindes 23 spreizbar ist und durch Einschrauben eines (nicht dargestellten) Schraubbolzens aufgeweitet wird. Das Ausführungsbeispiel von Fig. 2 entspricht weitgehend demjenigen der Fig. 1, so daß die nachfolgende Beschreibung sich auf die Erläuterung der Unterschiede beschränkt.

Gemäß Fig. 2 enthält die Sprengkapsel 12 außer der pyrotechnischen Ladung 13 ein Zündhütchen 25, mit einer auf dem flachen Hülsenboden 15 angeordneten Initialladung 26, die durch Eindrücken des Hülsenbodens 15 gegen ein Widerlager 27 gedrückt wird. Das Innere des Zündhütchens 25 ist über eine Bohrung 28 mit dem die Ladung 13 enthaltenden Raum verbunden. Bei einem Schlag, der auf den Hülsenboden 15 ausgeübt wird, wird die Initialladung 26 durch Druckwirkung entzündet. Die Initialladung 26 zündet ihrerseits durch die Bohrung 28, die Hauptladung 13 thermisch an.

Beim Einsatz des Dübels nach Fig. 2 wird, nachdem der Dübel in eine entsprechende Bohrung der Wand eingeschoben worden ist, ein Dorn in den Längskanal 19 eingeführt. Nachdem das vordere Ende des Dorns den Hülsenboden 15 erreicht hat, wird mit einem Hammer o.dgl. ein Schlag auf den Dorn ausgeübt, wodurch das Zündhütchen 25 gezündet wird. Dadurch wird die Ladung 13 zur Detonation gebracht und der Verformungsraum 11 aufgeweitet.

Alternativ besteht die Möglichkeit, den Dübel von Fig. 2 mit einem entsprechenden Auslösewerkzeug, das einen Ultraschallkopf aufweist, zu zünden.

Die Ladung 13 kann beispielsweise folgende Zusammensetzung enthalten:

| | | |
|---|---|---|
| Tetrazen | 5 - | 25 % |
| Nitrozellulose | 5 - | 25 % |
| Nitromannit | 5 - | 25 % |
| Aluminiumgrieß | 40 - | 80 % |
| Eisenpulver | 40 - | 80 %. |

## Ansprüche

1. Pyrotechnischer Dübel mit einem Schaft (10), der am vorderen Ende einen eine Sprengkapsel (14) enthaltenden Verformungsraum (11) aufweist, d a d u r c h   g e k e n n z e i c h n e t , daß der Schaft (10) einen vom rückwärtigen Ende (20) bis zu dem Verformungsraum (11) reichenden Längskanal (19) aufweist und daß diejenige Wand (15) der Sprengkapsel (12), die dem Längskanal (19) zugewandt ist, derart ausgebildet ist, daß sie Wärme oder Stöße zum Auslösen der Sprengkapsel (12) übertragen kann.

2. Pyrotechnischer Dübel nach Anspruch 1, dadurch gekennzeichnet, daß der Längskanal (19) mit einem Innengewinde (23) versehen ist.

3. Pyrotechnischer Dübel nach Anspruch 1 oder 2, dadurch gekennzeichnet, daß zwischen dem Verformungsraum (11) und dem Längskanal (19) eine dem Schaft (10) einstückig angeformte ringförmige Stützwand (17) angeordnet ist.

4. Pyrotechnischer Dübel nach einem der Ansprüche 1 bis 3, dadurch gekennzeichnet, daß die Sprengkapsel (12) ein durch Schlagwirkung auslösbares Zündhütchen (25) enthält, das seinerseits die Sprengladung (13) anzündet.

5. Pyrotechnischer Dübel nach einem der Ansprüche 1 bis 4, dadurch gekennzeichnet, daß eine langgestreckte Auslösevorrichtung vorgesehen ist, die in den Längskanal (19) einführbar ist und am vorderen Ende einen Auslösekopf trägt.

FIG.1  FIG.2

# Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 156 082 (PUNTOUS) * Zusammenfassung * | 1,5 | F 16 B 13/00 |
| A | DE-B-1 072 431 (SCHMID) * Spalte 3, Zeile 49 * | 4 | |
| A | CH-A- 236 451 (DYNAMIT-ACTIEN-GESELLSCHAFT VORM. ALFRED NOBEL & CO.) * Figur 1 * | 1,5 | |
| A | US-A-2 378 118 (WIDRICH) * Figuren 6, 7 * | 1,4,5 | |
| A | US-A-2 429 239 (ROGERS) * Figur 1 * | 1 | |

### RECHERCHIERTE SACHGEBIETE (Int. Cl.4)

| Kategorie | Kennzeichnung | Betrifft Anspruch | Klassen |
|---|---|---|---|
| A,D | DE-A-2 641 588 (DYNAMIT NOBEL) * Anspruch 1 * | 1 | F 16 B 13/00 F 16 B 19/12 E 21 D 21/00 F 16 B 5/00 |

Der vorliegende Recherchenbericht wurde für alle Patentansprüche erstellt.

| Recherchenort | Abschlußdatum der Recherche | Prüfer |
|---|---|---|
| BERLIN | 02-07-1987 | ZAPP E |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82